# EUROPEAN PATENT SPECIFICATION

(11) **EP 4 502 311 B1**
(45) Date of publication and mention of the grant of the patent: **01.07.2026**
(21) Application number: 24189932.7
(22) Date of filing: 21.07.2024
(51) Int. Cl.: E04D 15/04, B65G 59/06

(54) **MOBILE SYSTEM FOR PLACING INSULATION BOARDS**
MOBILES SYSTEM ZUR PLATZIERUNG VON DÄMMPLATTEN
SYSTÈME MOBILE POUR POSER DES PANNEAUX ISOLANTS

(30) Priority: 04.08.2023 NL 2035553
(43) Date of publication of application: 05.02.2025
(73) Proprietor: Van Eekeres, Wilhelmus, 3771 GA Barneveld (NL)
(72) Inventor: Van Eekeres, Wilhelmus, 3771 GA Barneveld (NL)
(74) Representative: Laddé, Jurre Gerard

(56) References cited:
- EP-B1- 1 375 397
- WO-A1-2021/080424
- NL-C2- 1 027 861
- US-A- 3 983 676

## Description

### FIELD OF THE INVENTION

This disclosure relates to a mobile system for placing insulation boards on a flat roof, in particular to such a mobile system comprising an insulation board dispenser system.

### BACKGROUND

Nowadays, when insulation boards are placed on a flat roofs, a stack of insulation boards is placed somewhere on the roof. Workers take off one insulation board at a time and carry it to the intended position where they place the board on the roof. This means that the workers repeatedly have to walk back to the stack of insulation boards in order to take off a new board and place it somewhere on the roof. Not only is this way of placing insulation boards very labour intensive, it is also relatively dangerous. Workers carrying the insulation boards may trip and fall. For example, the wind blowing against the relatively large insulation board may destabilize the worker carrying it. Systems for placing panels on a roof are known from EP 1 375 397 B1, US 3 983 676 A, WO 2021/080424 A1, and NL 1 027 861 C2.

Hence, there is a need in the art for technology that allows to place insulation boards on roofs, and more generally to place plate-like elements on a surface, in a less labour intensive and safer manner.

### SUMMARY

To that end, the present invention provides a mobile system for placing plate-like elements according to claim 1. The mobile system is configured to hold a plurality of plate-like elements and comprises a dispenser system that is configured to release from the mobile system a plate-like element out of the plurality of plate-like elements.

A plate-like element as referred to herein may be understood as a relatively thin piece of material, for example in that the thickness, which extends in a vertical direction, of the plate-like element is at least four times smaller than its width and at least four times smaller than its length. Any plate-like element referred to herein may be an insulation board. Irrespective of this, any plate-like element referred to herein may be shaped as a rectangular cuboid, but this is not per se required. A plate-like element as referred to herein for example need not be rectangular as viewed in the vertical direction, but may have any shape, such as triangular or an irregular shape.

The mobile system is configured to place insulation boards on a flat roof. According to the invention, the plurality of plate-like elements is a plurality of insulation boards and the dispenser system is an insulation board dispenser system that is configured to release from the mobile system an insulation board out of the plurality of insulation boards.

This system greatly eases placing insulation boards on a flat roof. A plurality of insulation boards, which may be a stack of at least two, usually at least ten, insulation boards, may be simply inserted in the mobile system. The mobile system can then be moved over the roof and when it arrives at a position where an insulation board is to be placed, the mobile system can dispense an insulation board there. Subsequently, the mobile system can be moved a little further in order to dispense a next insulation board next to the already placed insulation board. Hence, the mobile system obviates the need for a worker to walk back to a stack of insulation boards somewhere on the roof every time that the worker has placed an insulation board.

Typically, the insulation boards are shaped as rectangular cuboids, but the mobile system can in principle be used to place insulation boards of any shape.

The insulation boards of the plurality of insulation boards are positioned one below the other. Then, the plurality of insulation boards comprises a bottom insulation board, which is the lowest insulation board out of the plurality of insulation boards, and a second to lowest insulation board, which is the second to lowest insulation board out of the plurality of insulation boards. According to the invention, the insulation board dispenser system is configured to release the lowest insulation board from the mobile system without releasing the second to lowest insulation board from the mobile system.

This allows to conveniently release only the lowest insulation board. The second-to-lowest insulation board, since it is not released, may block the other insulation boards above it so that these other insulation boards are also not released. It is advantageous that only one insulation board is released, because typically only one layer of insulation boards is placed on a roof.

The insulation board dispenser system comprises a first holding system that is configured to selectively hold or release the lowest insulation board, and a second holding system that is configured to selectively hold or release the second to lowest insulation board.

The two holding systems, which may be separately controllable, are advantageous in that they enable to easily release the lowest insulation board without releasing the second to lowest insulation board (nor another insulation board out of the plurality of insulation boards). When the mobile system is being moved to some position on the roof, the first holding system may hold the lowest insulation board and the second holding system may hold the second to lowest insulation board. Then, upon arrival at the correct position, the second holding system may continue to hold the second to lowest insulation board while the first holding system releases the lowest insulation board from the mobile system. Hence, only the lowest insulation board is released from the mobile system. Preferably, the mobile system has been positioned such that the released insulation board falls into a predetermined position on the roof. Of course, upon releasing the lowest insulation board from the mobile system, the second to lowest insulation board becomes the lowest insulation board of the plurality of insulation boards in the mobile system and the third to lowest insulation board becomes the second to lowest insulation board. This means that the second holding system is now holding the lowest insulation board. In any case, after having released the lowest insulation board, the first holding system may adopt a state again in which it can hold a lowest insulation board. Once the first holding system has adopted this holding state, the second holding system may release the then lowest insulation board that it is holding. This release may cause the lowest insulation board to move downwards. The first holding system may then hold this lowest insulation board to prevent release from the mobile system. The second holding system releasing the (then) lowest insulation board typically causes other insulation boards to move downwards as well, so that the (then) second to lowest insulation board reaches a position in which it can be held again by the second holding system. Once the second holding system holds this second to lowest insulation board, the mobile system will be in the same state as before this insulation board dispensing act except that the plurality of insulation boards now comprises one insulation board less.

The second holding system comprises a clamp system that is configured to push against one or more side surfaces of the second to lowest insulation board for clamping the second to lowest insulation board in place.

Advantageously, this second holding system does not require elements to be present underneath the second to lowest insulation board for holding it. This may be difficult, because typically at the moment that the second to lowest insulation board is clamped, it rests on the lowest insulation board, meaning that there is typically no space between the lowest and second to lowest insulation board into which such elements can be inserted.

Preferably, the clamp system is configured to clamp against at least two side surfaces of the second to lowest insulation board, wherein the at least two side surfaces are opposite side surfaces.

In an embodiment, the mobile system is configured to hold a second plurality of insulation boards, e.g. in that it can hold two stacks of insulation boards that are positioned next to each other. If that is the case, then the second plurality of insulation boards would typically also have a lowest insulation board and a second to lowest insulation board. The insulation board dispenser system may then be configured to release the lowest insulation board of the (first) plurality of insulation boards as well as the lowest insulation board of the second plurality of insulation boards at the same time, preferably without releasing, of course, the second to lowest insulation board of the (first) plurality of insulation boards nor the second to lowest insulation board of the second plurality of insulation boards. It should be appreciated that the same mechanisms may be used for releasing insulation boards of the second plurality of insulation boards as for releasing insulation boards of the (first) plurality of insulation boards.

In an embodiment, the mobile system is configured to hold the plurality of insulation boards such that, before the lowest insulation board is dispensed from the mobile system, a side surface of the lowest insulation board, when the mobile system is tilted, touches a side surface of an already placed insulation board.

In an embodiment, the first holding system comprises one or more movable elements that are each configured to move between a hold position and a release position. Each movable element is configured to support the lowest insulation board when the movable element is in the hold position and to make way for the lowest insulation board when the movable element is in the release position so that the lowest insulation boards is released from the mobile system.

This embodiment provides a first holding system that is relatively easy to implement.

The movable elements may be controllable such that they switch from the hold position to the release position simultaneously. This is advantageous as it may cause the lowest insulation board to fall down relatively straight out of the mobile system which aids to accurately place the insulation board on the predetermined position.

Preferably, the movable elements are positioned below the lowest insulation board when they are in the hold position. This namely allows them to catch the then lowest insulation board that is released by the second holding system as described above.

In an embodiment, at least one element of the second holding system has an adjustable position relative to the first holding system, preferably has an adjustable height relative to the frame.

To illustrate, if the second holding system comprises a clamp system and if the clamp system comprises one or more clamp elements that are configured to push against the side surfaces of the second to lowest insulation board, then the position, preferably the height, of these one or more clamp elements is adjustable relative to the frame. This is advantageous in that it enables the mobile system to be suitable for placing insulation boars of different thicknesses. If for example the insulation boards are relatively thin, then the one or more clamp elements may need to sit relatively low. If in such case the one or more clamp elements would be positioned too high, then they might push against side surfaces of the third to lowest insulation board instead. The other way around is also true. If the insulation boards are relatively thick, then the one or more clamp elements may need to sit relatively high. If they would be positioned too low, then they may push against the side surfaces of the lowest insulation board.

In an embodiment, the mobile system comprises a mobility system configured to enable the mobile system to move over the flat roof. The mobility system comprises one or more elements, such as one or more wheels, that, in use, touch the flat roof and are supported by the flat roof. The mobility system may be configured to adjust a position, preferably a height, of at least one element out of the one or more elements relative to a or the frame of the mobile system.

This embodiment is advantageous in that it enables to keep the insulation boards level even if for example one wheel rests on the bare flat roof and another wheel rests on an already placed insulation board.

Additionally or alternatively, the one or more elements of the mobility system comprise one of more wheels. This embodiment can be easily implemented.

Note however, that the mobility system may alternatively comprise tracks, for example.

In an embodiment, each wheel out of the one or more wheels has a diameter of at least 0.5 meter, preferably of at least 1 meter, more preferably of at least 1.5 meter.

Such wheels having relatively large diameter are advantageous in that they can easily roll over corrugated roof plates. Typically, insulation boards are placed on such plates. A further advantage of such large diameter wheels is that they allow the mobile system to be easily tilted. The tipping axis of the system, i.e. wheel axis, then sits relatively close to the center of gravity of the system. Consequently, the center of gravity will not move significantly away from the tipping axis when the system is being tilted. This limited distance between tipping axis and center of gravity means that only a small lever arm, and thus only a small torque, will be created. Such small torque can be easily counteracted by the person who is tilting the mobile system. Hence, the large diameter wheels enables easy control of the mobile system.

In an embodiment, the mobility system comprises two and only two wheels having a diameter of at least 0.5 meter, preferably of at least 1 meter, more preferably of at least 1.5 meter.

This embodiment enables to easily maneuver the mobile system.

In this embodiment, the mobile system may have one or more further wheels having a diameter of less than 0.5 meter, preferably less than 1 meter, more preferably less than 1.5 meter.

In an embodiment, mobile system comprises one or more auxiliary wheels that are configured to run over one or more side surfaces of already placed insulation boards when the mobile system is moving over the flat roof for correctly positioning the mobile system relative to the already placed insulation boards. This embodiment is advantageous in that the mobile system and thus the plurality of insulation boards are in the correct position relative to the already placed insulation boards so that the insulation board that is going to be released will end up in the correct position. If the one or more auxiliary wheels are touching already placed insulation boards, then this means that the mobile system is positioned correctly. These auxiliary wheel may have for example a diameter of approximately 5 centimeter.

In an embodiment, the mobile system comprises a third holding system that is configured to selectively hold or release a further insulation board out of the plurality of insulation boards.

This embodiment is especially advantageous if the plurality of insulation boards comprises a number of subsets of insulation boards, wherein each subset comprises several insulation boards that are held together, for example in that each subset is wrapped in its own packaging material which holds the insulation boards in that subset together. The third holding system can be used to separate a lowest subset from the other subsets so that for example the packaging material of the lowest subset can be easily removed. Removing such packaging material from a subset may be far more difficult if another subset rests on top of it. This is especially true if the packaging material covers an upper surface of that subset. As referred to herein, holding a subset of insulation boards may be performed by the third holding system holding an insulation board of that subset. Since the insulation boards in a subset are held together, e.g. by packaging material, holding an insulation board of a subset effectively means that the subset comprising that insulation board is held.

The third holding system may comprise a clamp system as described above. Additionally or alternatively, the third holding system may comprise one or more toggle clamps.

In an embodiment, the mobile system comprises a lifting system that is configured to lift one or more insulation boards in the mobile system.

This embodiment is especially advantageous if the mobile system comprises a third holding system referred to above. If that is the case, then the lifting system may be used to move up or down the plurality of insulation boards so that a second to lowest subset of insulation boards can be held by the third holding system. Once the third holding is indeed holding the second to lowest subset, the lifting device may bring the lowest subset of insulation boards down, for example until the lowest insulation board is held by the first holding system. Thereafter, any packaging material may be removed so that the insulation boards of the lowest subset can be released one by one using the first holding system and the second holding system.

The lifting system preferably comprises movable support elements. Preferably, the movable support elements can be controlled to move up or down. The lifting system may comprise a pully and the movable support elements may be connected to the pully by means of flexible elongated elements, such as ropes, cords, et cetera. Additionally or alternatively, the lifting system may comprise a rack and pinion system and/or a linkage mechanism and/or a hydraulic cylinder and/or a leadscrew, et cetera.

In an embodiment, the lifting system comprises one or more movable support elements, wherein each movable support element out of the one or more movable support elements is configured to move between a first position, which may also be referred to as the maneuver position, and a second position, which may be referred to as the lifting position. In this embodiment, when all of the one or more movable support elements are in the maneuver position, the mobile system is maneuverable, without hindrance from the one or more movable support element, into an insulation board pick up position, In an example, the mobile system is positioned around a stack of insulation boards when in the insulation board pick up position. Further, in this embodiment, when all of the one or more movable support elements are in the lifting position while the mobile system is in the insulation board pick up position, an upward movement of the one or more movable support elements causes the one or more insulation boards to be lifted in the mobile system.

Thus, in this embodiment, the mobile system may be placed around a stack of insulation boards while the one or movable support elements are in the maneuver position. Then, once the mobile system reaches the insulation board pick up position, the one or more movable support element may move into the lifting position. Typically, the movement from the maneuver position into the lifting position has a horizontal component into the mobile system. Also, typically, the one or more movable support elements are moved underneath the stack of insulation boards. This is possible, especially if the stack of insulation boards sits on a pallet such that there is some space between the roof and the stack of insulation boards into which the one or movable support elements can move. Then, once the one or more movable support elements have been brought into the lifting position, they may be lifted upwards so that they lift the stack of insulation boards from the pellet. Once lifted, the stack may for example be captured by the first and/or second and/or third holding system.

Each of the one or more movable support elements may comprise a flat upper surface.

In an embodiment, the mobile system is lighter than 75 kilograms, preferably lighter than 70 kilograms, more preferably lighter than 65 kilograms. Such light mobile systems can be safely put on a roof.

In an embodiment, elements of the mobile system are releasably attached to each other.

This embodiment enables that the mobile system can be easily (dis)assembled. The mobile system can be transported to the location of a building on which insulation boards are to be placed, and assembled there. Additionally or alternatively, a releasable element may be beneficial in that releasing the element may make way for a plurality of insulation boards to be positioned in the mobile system. In a preferred embodiment, a handle bar can be removed from the mobile system so that a plurality of insulation boards can be placed in the mobile system.

In an embodiment, the mobile system comprises a control system that is configured to control the first holding system and/or second holding system and/or third holding system and/or the mobility system and/or the lifting system.

In an embodiment, the mobile system comprises an automatic positioning system that is configured to control a position and/or orientation of the mobile system on the roof based on position data, wherein the position data indicate a current position and/or a current orientation of the mobile system on the roof.

It should be appreciated that the (generic) mobile system described herein that is configured to place plate-like elements on a surface may comprise any element or system of any mobile system described herein that is configured to place specifically insulation boards on a flat roof. Such element or system, when implemented in the generic mobile system, would then be configured to handle, e.g. release, hold, push, lift, et cetera, generic plate-like elements instead of being configured to handle insulation boards specifically.

One distinct aspect of the present invention is solved by a method for placing plate-like elements on a surface according to claim 10. The method comprises using any of the mobile systems disclosed herein for placing the plate-like elements on the surface.

In an embodiment of the method, the method comprises using any of the mobile systems disclosed herein for placing insulation boards on a flat roof.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments but defined by the appended claims.

### BRIEF DESCRIPTION OF THE DRAWINGS

Aspects of the invention will be explained in greater detail by reference to exemplary embodiments shown in the drawings, in which:
FIG. 1 schematically illustrates a mobile system according to an embodiment;
FIG. 2 illustrates how a lowest insulation board is released according to an embodiment;
FIG. 3 illustrates how a next subset of insulation boards is prepared for being placed on a roof according to an embodiment;
FIG. 4 illustrates an embodiment of the mobile system having a wheel the height of which is adjustable;
FIG. 5 schematically shows a wheel position adjustment system according to an embodiment;
FIG. 6 illustrates an embodiment of the mobile system in use;
FIG. 7 illustrates an embodiment of the mobile system comprising auxiliary wheels;
FIG. 8 illustrates an embodiment wherein the mobile system is configured to hold insulation boards that are positioned side by side, instead of stacked on top of each other;
FIG. 9 schematically illustrates an embodiment of the mobile system comprising push elements;
FIG. 10 shows a mobile system according to an embodiment;
FIG. 11 shows a wheel position adjustment system according to an embodiment.

### DETAILED DESCRIPTION OF THE DRAWINGS

In the figures, identical reference numbers indicate identical or similar elements.

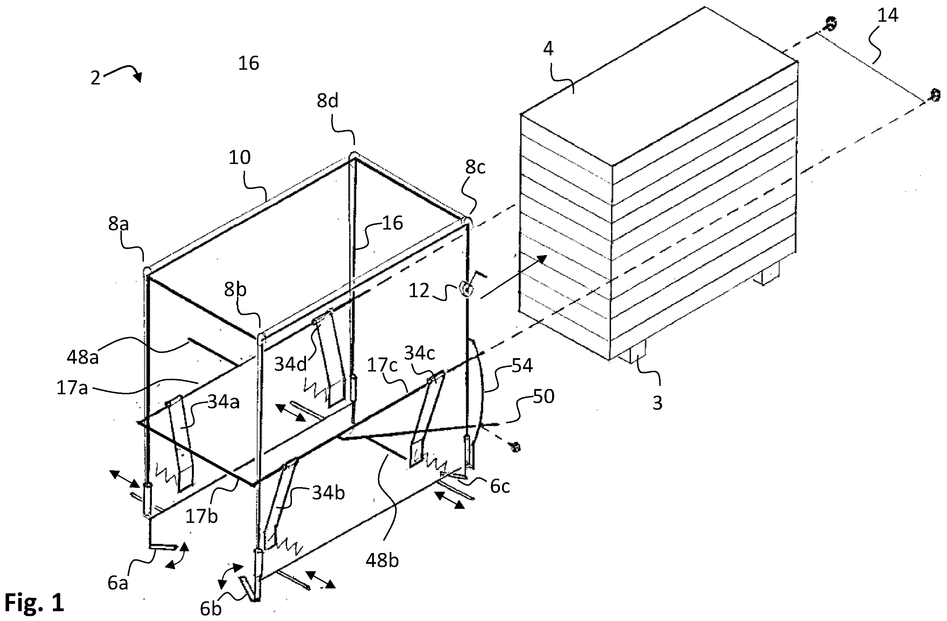

Figure 1 illustrates a mobile system 2 for placing insulation boards on a flat roof. The mobile system 2 is configured to hold a plurality of insulation boards 4. These insulation boards may have been placed on a roof using a crane and therefore typically rest on a pallet 3. Preferably, elements of the mobile system 2 are releasably attached to each other. Figure 1 illustrates for example that a handle bar 14 can be temporarily removed from the frame 16 of the mobile system 2 so that the plurality of insulation boards 4 can be placed in the mobile system 2. How this may work is that the mobile system 2 moves in the direction of the arrow until it is positioned around the stack of insulation boards 4. Frame 16 of mobile system 2 comprises a U-shaped frame that is formed by beams 17a, 17b, 17c. The mobile system 2 can be moved towards the stack of insulation boards 4 until beam 17b touches the stack of insulation boards 4. Once the mobile system 2 and the stack 4 are correctly positioned relative to each other, the handle 14 can be mounted again on the frame 16 so that the stack of insulation boards is enclosed by the U-shaped frame 17 and the handle bar 14.

Support elements 6a, 6b, 6c of a lifting system may then be moved underneath the stack of insulation boards. (Support element 6d is not visible.) The support elements can then be controlled to move upwards to move the stack of insulation boards from the pallet 3.

Typically, insulation boards have a width of more than 1 meter, e.g. approximately 1.2 meter and a length of more than 2 meter, e.g. approximately 2.5 meter. Further, the insulation boards typically have a thickness between 2 and 25 centimeters. Typically, the plurality of insulation boards is higher than 2 meters, e.g. 2.4 meters. The insulation boards typically comprise materials such as Polyisocyanurate (PIR), Expanded polystyrene (EPS), extruded polystyrene (XPS).

In the depicted embodiment, the support elements 6 are movable in the vertical direction, upwards and downwards. If the plurality of insulation boards 4 is placed on the support elements, the support elements may be controlled to move up herewith lifting the plurality of insulation boards 4 in the mobile system 2. Preferably, as indicated by the double arrows, the support elements 6 are also movable in that they can be in a hold position in which they are below the plurality of insulation boards in the mobile system 2 and in a release position in which they are not below the plurality of insulation boards 4 thus allowing insulation boards to be released from the mobile system 2.

The lifting system comprises one or more pulleys 8a, 8b, 8c, 8d and one or more flexible, elongated elements 10, such as one or more wires, ropes, cords, et cetera, and a winch 12. For clarity, elements 10 are hereinafter referred to as wires 10. In the embodiment of figure 1, the wires 10 are connected to the winch 12 at one end, and to a support element 6 at another end. By turning the crank of the winch, the support elements move upwards or downwards.

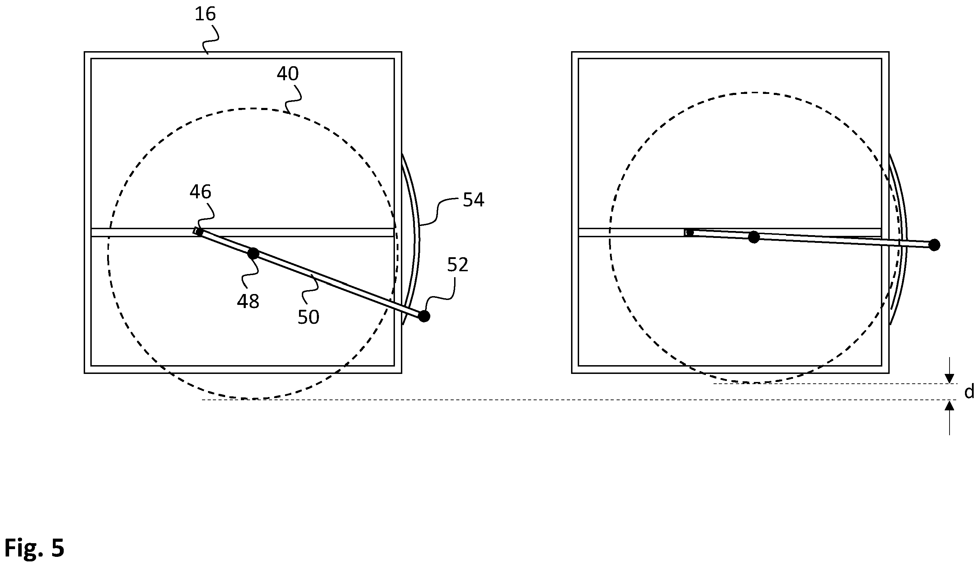

Figure 1 also shows two axes 48a and 48b that each is configured to support a wheel. The indicated beam 50 and guiding element 54 will be explained in more detail with reference to figure 5.

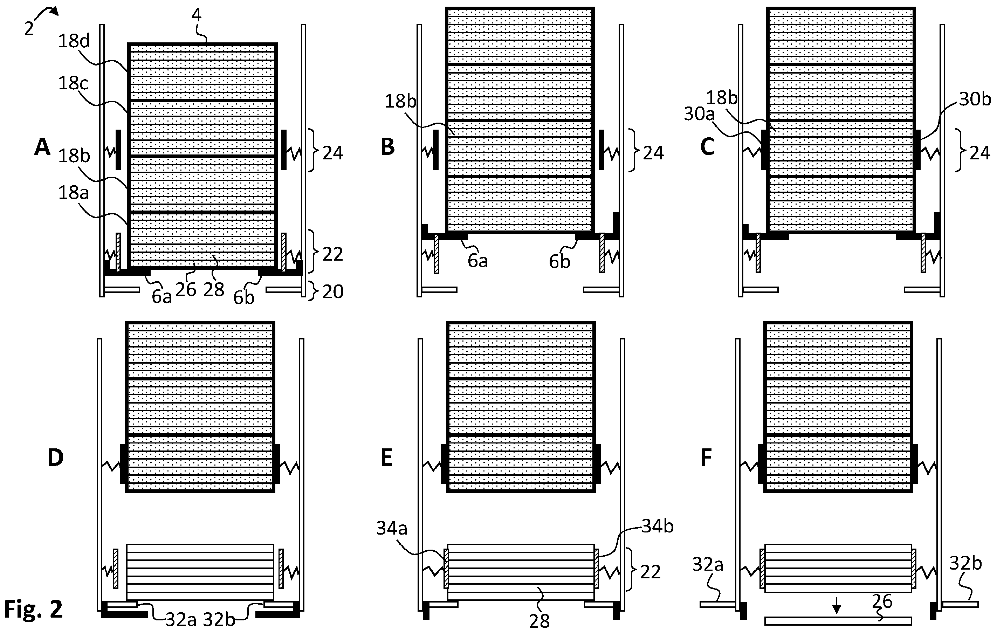

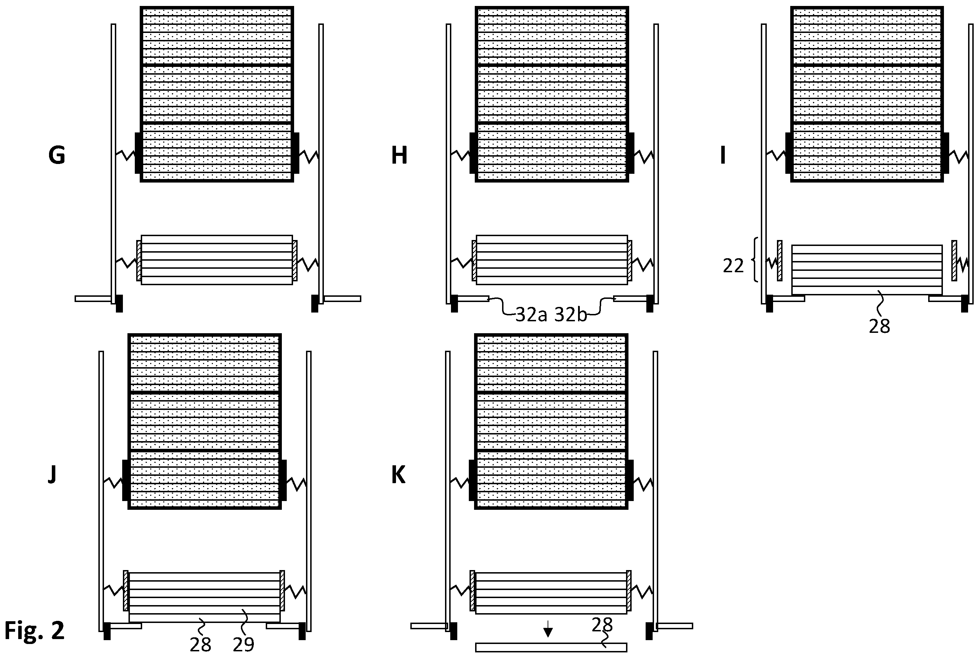

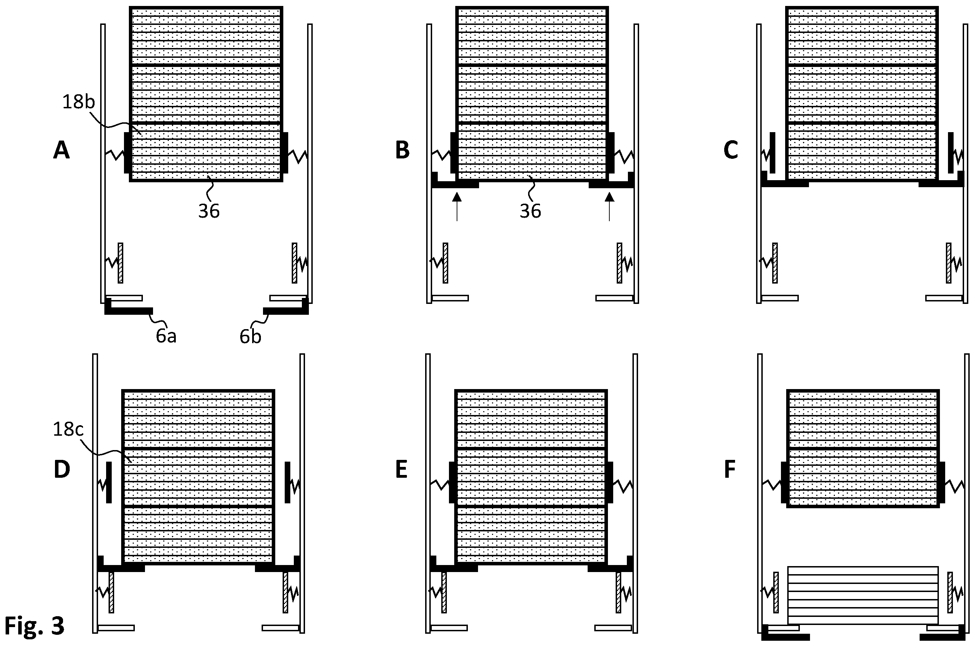

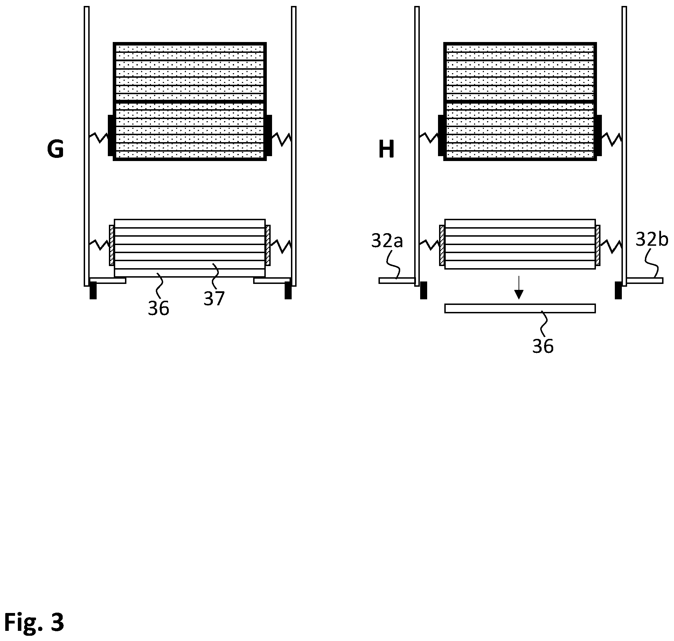

Figures 2 and 3 schematically illustrate the operation of a mobile system 2 according to an embodiment, in particular the operation of the insulation board dispenser system that is configured to release from the mobile system 2 an insulation board out of the plurality of insulation boards.. Figures 2 and 3 show schematic front views of the mobile system 2 of figure 1. Each view shows the mobile system 2 in a different state. For clarity, not all components of the mobile system are shown.

Figure 2A shows that the situation right after the plurality of insulation boards has been placed on support elements 6 of the lifting system. Only support elements 6a and 6b are visible. Typically, insulation boards are delivered in subsets of insulation boards, wherein each subset is held together by packaging material. In figures 2 and 3, the packaging material, which may be wrapped foil, is indicated by the dotted fill. Further, in figures 2 and 3, each subset of insulation boards has a relatively thick contour. In figure 2A, the plurality of insulation boards 4 consists of four subsets 18a, 18b, 18c, 18d, wherein each subset consists of seven insulation boards.

Also visible in figure 2A are the first holding system 20, second holding system 22 and third holding system 24.

As can be seen, the insulation boards 4 are positioned one below the other. Insulation board 26 is the lowest insulation board and insulation board 28 is the second to lowest insulation board. The first holding system 20 is configured to selectively hold or release the lowest insulation board 26 and the second holding system 22 is configured to selectively hold or release the second to lowest insulation board 38. As will be explained below the first 20 and second 22 holding system together enable the mobile system 2 to release the lowest insulation board 26 from the mobile system 2 without releasing the second to lowest insulation board 28 from the mobile system 2. Hence, the mobile system 2 can release one insulation board at a time.

Figure 2B shows that the lifting system, in particular support elements 6, have lifted the plurality of insulation boards 4. The third holding system 24 can selectively hold or release a further insulation board out of the plurality of insulation boards. With the plurality of insulation boards being lifted as seen in figure 2B, the third holding system 24 can hold subset 18b, which is depicted in figure 2C. To this end, the third holding system 24 may comprise toggle clamps 30a and 30b that can be used to clamp subset 18b, and of course all insulation boards in subset 18b, in place.

Once, the third holding system 24 is holding subset 18b, the lifting system may lower subset 18a again. To this end, the support elements 6 may be lowered until the lowest insulation board 26 rests on the movable elements 32a and 32b of the first holding system 20 as can be seen in figure 2D. In figure 2D, the movable elements 32 are in the hold position. In this situation, subset 18a is readily accessible allowing for easy removal of the packaging material.

Figure 2E shows that the second holding system 22 holds the second to lowest insulation board 28. In fact, the second holding system 22 is also holding the five insulation boards above insulation board 28, but this is not strictly necessary, of course. After all, if insulation board 28 is held in place by the second holding system 22, it will hold in place the insulation boards resting on it. The second holding system 22 may comprise a clamp system comprising clamp elements 34a and 34b (also indicated in figure 1) that in figure 2E pushes against the side surfaces of the insulation board 28. Herewith, insulation board 28 is clamped in place.

Preferably, the position of the second holding system, in particular of clamp elements 34 of the second holding system 22, is adjustable relative to the first holding system. After all, when insulation board 26 rests on the movable elements 32 of the first holding system, the second holding system must be positioned such that it can hold the second to lowest insulation board 28. However, the correct position of the second holding system, in particular of clamp elements 34, thus depends on the thickness of the insulation boards that are being placed. Hence, being able to adjust the position, in particular the height, of the second holding system 22 relative to the first holding system 20, the mobile system is suitable for placing insulation boards of various thickness.

In figure 2E, the support elements 6 of the lifting system have moved, e.g. rotated, as for example indicated in figure 1 so that they make way for the lowest insulation board 26 to be released from the mobile system 2 as depicted in figure 2F.

Figure 2F shows that upon the movable elements 32 moving to the release position, in which they make way for the lowest insulation board 26, the lowest insulation board 26 is released from the mobile system 2. In such manner, the insulation board 26 can placed on a predetermined location on the roof.

After insulation board 26 has been released from the system, the mobile system can be moved to another position so that insulation board 28 can be placed there. This is illustrated in figures 2G - 2K. Figure 2G shows the situation after insulation board 26 has been released. Then (figure 2H) the movable elements 32 of the first holding system move to their respective holding positions again. Thereafter (figure 2I), the second holding system 22 releases insulation board 28, and also the other insulation boards of subset 18a. As a result, insulation board 28 falls down as will the other insulation boards. Insulation board 28 will then rest on movable elements 32 which are still in the hold position. Then (figure 2J), the second holding system 22 can hold the insulation board 29 so that insulation board 29 is not released from the mobile system. Thereafter (figure 2K), upon the movable elements 32 moving to their release positions again, only insulation board 28 is released from the mobile system and thus placed on the roof. This process can be repeated until all insulation boards of subset 18a have been released from the mobile system 2.

Figures 3A - 3H show how an insulation board 36 is released from a new subset 36. Figure 3A shows that support elements 6 have moved to their hold position and figure 3B that they have moved upwards, by the lifting system, so that they can support insulation board 36. Figure 3C illustrates that the third holding system releases insulation board 36. Thereafter (figure 3D) the lifting system lowers the support elements 6 so that the third holding system can hold subset 18c and all insulation boards in subset 18c, of course, which is shown in figure 3E. Then (figure 3E, the lifting system lowers subset 18b until the insulation board 36 rests on movable elements 32 of the first holding system. The packaging material holding the insulation boards of subset 18b together can be easily removed now. Thereafter (figure 3G), the second holding system holds the then second to lowest insulation board 37. Upon the movable elements 32 moving to their release positions, insulation board 36 is released and placed on the roof.

Preferably, the first holding system, second holding system and third holding system and lifting system are all separately controllable. The first and second holding system may for example be separately controllable by means of one or more cables, the first holding system by a first set of one or more cables and the second holding system by a second set of one or more cables. When the cables out of the first set are pulled, this may cause the movable elements to move to the release position. Once the cables are no longer pulled, the movable elements may, for example by means of one or more springs, move back to the hold position. Likewise, when the cables out of the second set are pulled, this may cause the clamp system to no longer push against side surfaces of an insulation board, so that it can move downwards. Once these cables are no longer pulled, the clamp system may, for example by means of one or more springs, resume pushing against side surfaces of another insulation board again. The pull on the cables may be effectuated using handles as are for example present on a handle bar of a bicycle. As known, such levers may be squeezed in order to pull one or more cables.

The third holding system may comprise one or more toggle clamps. Such toggle clamps may be manually operated one by one.

To that end, the mobile system preferably comprises a control system that is configured to control the first holding system and/or second holding system and/or third holding system and/or the mobility system and/or the lifting system.

Further, it should be appreciated that any movement of any element in the mobile system may be driven manually and/or by one or more auxiliary systems that may partially drive such movements using electrical energy, pneumatic energy, hydraulic energy, et cetera.

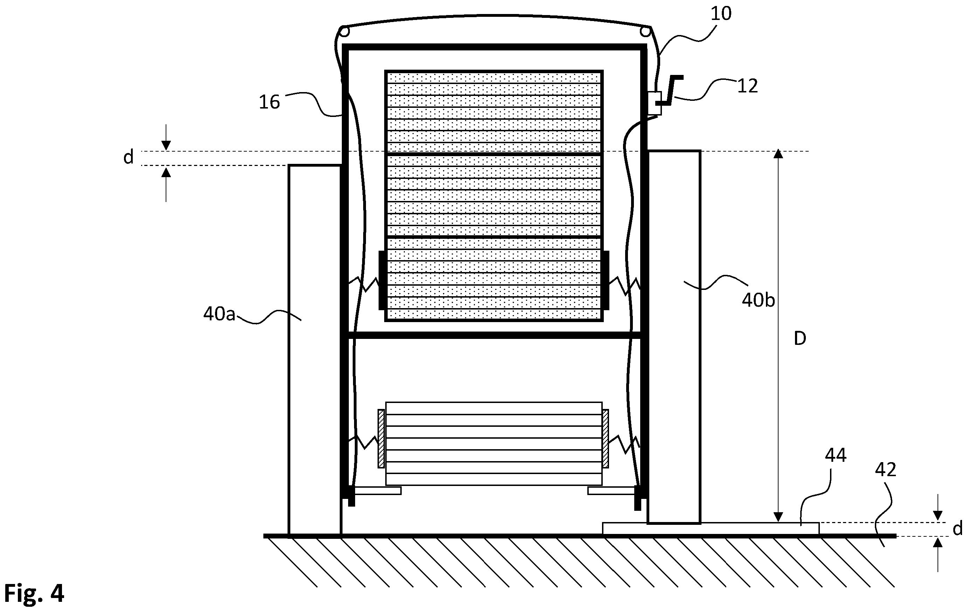

Figure 4 illustrates the mobile system with mobility system that enables the mobile system to move over a flat roof 42. In the depicted embodiment, the one or more elements 40a and 40b are respective wheels that, when the mobile system is used, touch and are supported by the flat roof 42.

The diameter D of the wheels is relatively large, preferably at least 0.5 meter, more preferably of at least 1 meter, most preferably at least 1.5 meter.

The mobility system of figure 4 is configured to adjust a position, preferably a vertical position, of at least one of the wheels 40 relative to the frame 16 of the mobile system 2. In figure 4, wheel 40b sits a distance d higher than wheel 40a. This is convenient because wheel 40b sits on an already placed insulation board 44 having a thickness of d as well. Hence, the frame 16 and the plurality of insulation boards remain level. This prevents the mobile system from becoming unstable.

Figure 5 illustrates a wheel position adjustment system that may be part of the mobile system according to an embodiment. The axis 48 of the wheel is connected to a beam 50 that can hinge around point 46 where the beam 50 is rotatably fixed to the frame 16. The beam 50 may be lifted by lifting lever 52. The movement of beam 50 may be guided by guiding element 54. When the beam 50 is lifted, the axis 48 is also lifted which, in turn, lifts the wheel 40, as is shown on the right hand side of figure 5. The beam 50 may be releasably fixed to the guiding element 54 so that the beam does not fall down again.

Of course, the mobile system alternatively comprises another type of wheel position adjustment system, for example one that comprises a rack and pinion system.

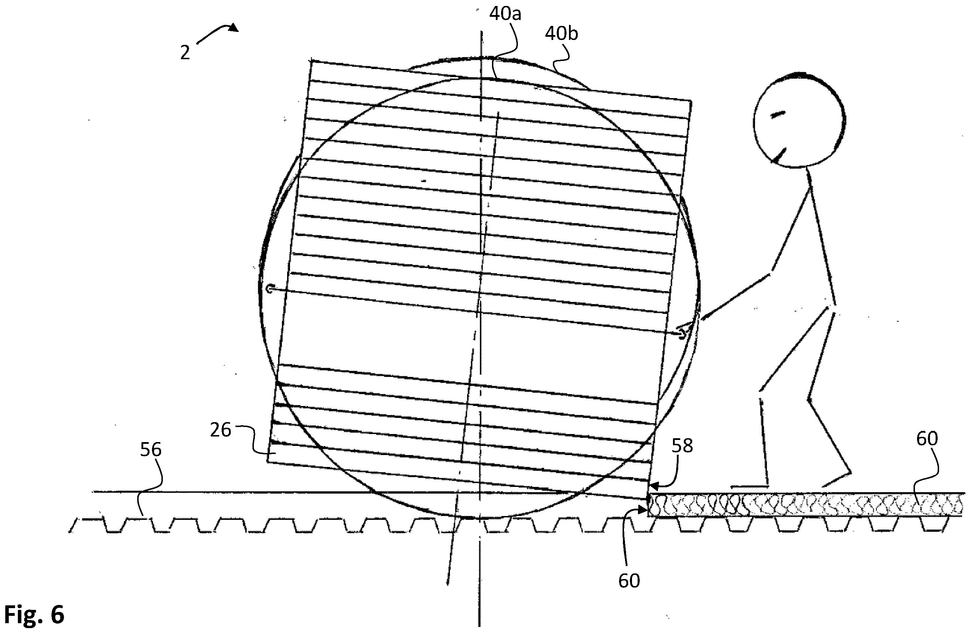

Figure 6 schematically shows the mobile system 2 while in use. Wheel 40b sits a bit higher than wheel 40a because wheel 40b is driven over already placed insulation boards.

As said, the wheels preferably have a large diameter. This is advantageous in that mobile system can easily move over corrugated plates 56 without getting stuck.

In the embodiment of figure 6, the mobile system 2 holds the plurality of insulation boards such that a side surface 58 of the lowest insulation board 26 touches the side surface 60 of already placed insulation board 60, when the mobile system 2 is tilted. This enables to accurately position the to be released insulation board on the roof such that it joins the already placed board 60.

In such embodiment, it may be beneficial if the movable elements 32 are positioned more to the center of the mobile system.

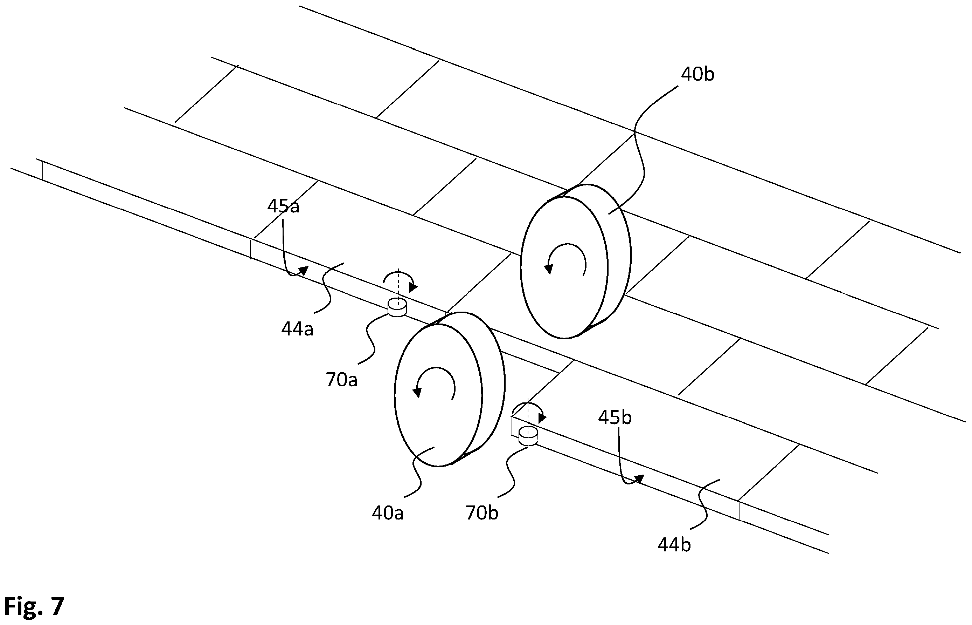

Figure 7 illustrates an embodiment of the mobile system that comprises auxiliary wheels 70a and 70b. For clarity, only wheels 40a and 40b of the mobile system are further shown. Wheel 70a runs over side surface 45a of already placed insulation board 44a and wheel 70 runs over side surface 45b of already placed insulation board 44b. This ensures that the mobile system 2 is correctly positioned relative to the already placed insulation boards.

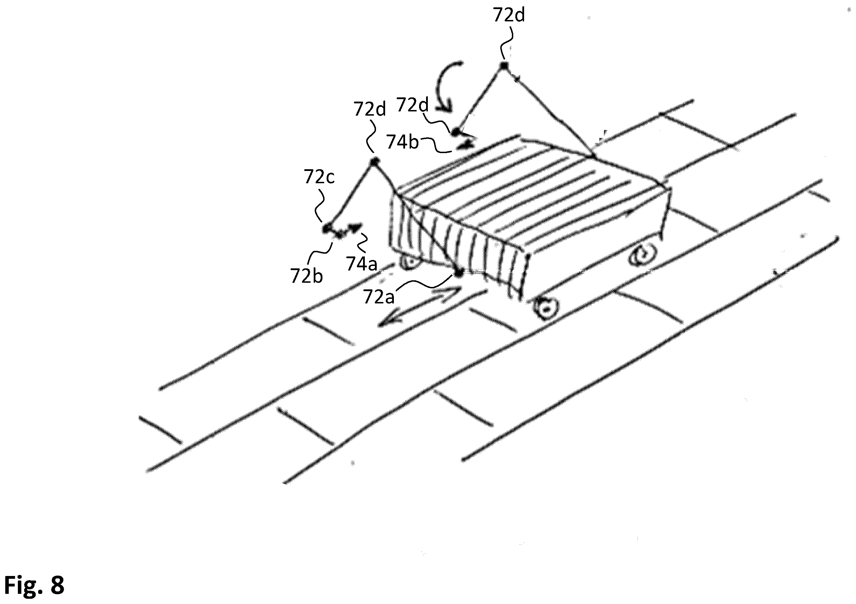

Figure 8 illustrates an embodiment wherein the mobile system is configured to hold a plurality of insulation boards that are placed next to each other instead of on top of each other. In this embodiment, the dispenser system comprises a mechanism to push an insulation board from the mobile system 2 so that the insulation boards topples off the mobile system 2. In the depicted embodiment, the insulation board dispenser system comprises a plurality of hinges 72 and two clamps 74a and 74b that are configured to selectively hold or release an outermost insulation board.

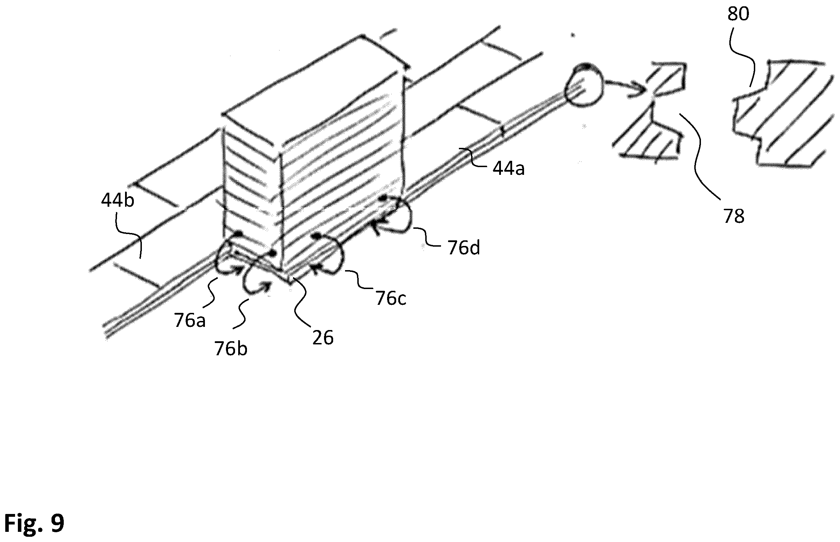

Figure 9 illustrates an embodiment of the mobile system that comprises one or more push elements 76. For clarity, only the push elements 76 are shown. These would be typically fixed to the frame of the mobile system.

Push elements 76a and 76b are configured to push an insulation board 26 that has been placed against already place insulation board 44a. Further, push elements 76c and 76d are configured to push the insulation board 26 against already placed insulation board 44b.

This is especially advantageous if the insulation boards can be connected to by a tongue-in-groove connection as shown on the right hand side. Each insulation board may comprise a recess, such as a groove 78 at one side and a protrusions, such as tongue 80, at an opposite side, so that the insulation boards can be connected to each other by pushing the tongue 80 of one insulation board into a groove 78 of another.

The push elements 76 may be controllable by means of one or more cables similarly as to how the first holding system and second holding system may be controlled.

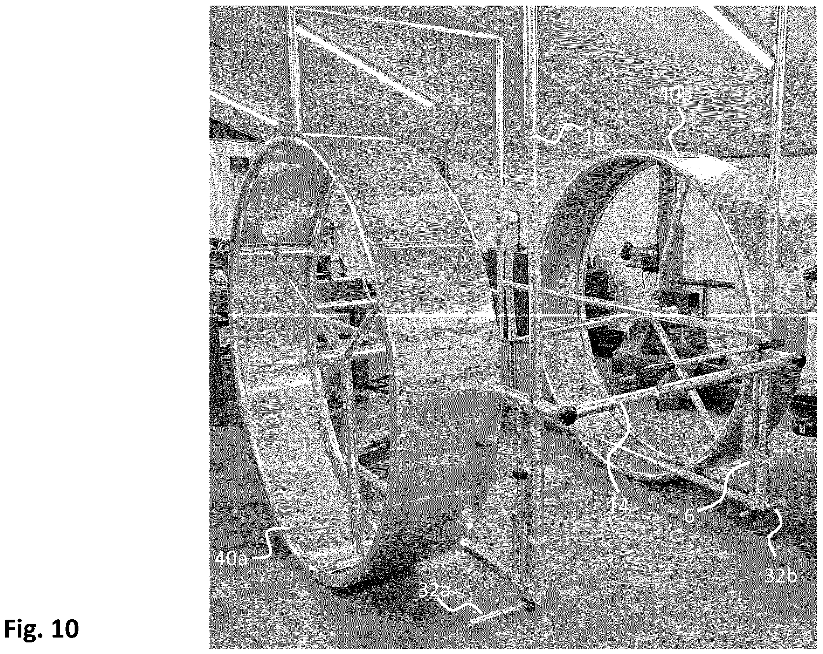

Figure 10 shows a mobile system according to an embodiment. Indicated are wheels 40, frame 16, handle bar 14, movable elements 32, and support element 6 as also referred to above

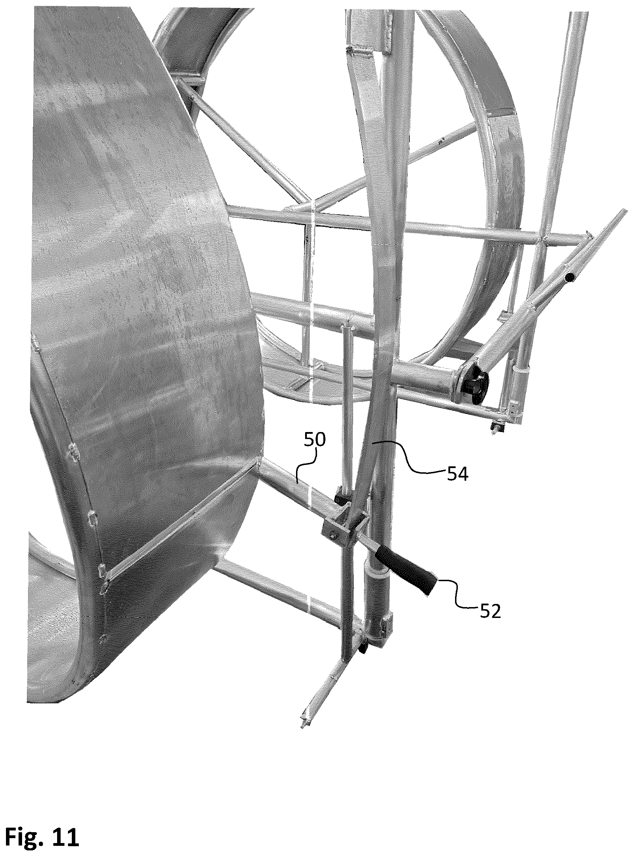

Figure 11 shows a wheel position adjustment system according to an embodiment. Indicated are beam 50, lever 52 and guiding element 54 as also referred to with reference to figure 5.

## Claims

1. A mobile system (2) for placing plate-like elements (4) on a surface, wherein
the mobile system (2) is configured to hold a plurality of plate-like elements (4) and comprises a dispenser system that is configured to release from the mobile system a plate-like element out of the plurality of plate-like elements, wherein the mobile system is configured to place insulation boards (4) on a flat roof, wherein
the plurality of plate-like elements (4) is a plurality of insulation boards (4), and wherein
the dispenser system is an insulation board dispenser system that is configured to release from the mobile system (2) an insulation board out of the plurality of insulation boards, wherein
the insulation boards (4) of the plurality of insulation boards are positioned one below the other and wherein the plurality of insulation boards comprises a bottom insulation board (26), which is the lowest insulation board out of the plurality of insulation boards, and a second to lowest insulation board (28), which is the second to lowest insulation board out of the plurality of insulation boards, wherein
the insulation board dispenser system is configured to release the lowest insulation board (26) from the mobile system (2) without releasing the second to lowest insulation board (28) from the mobile system, wherein
the insulation board dispenser system comprises
- a first holding system (20) that is configured to selectively hold or release the lowest insulation board (26), and
- a second holding system (22) that is configured to selectively hold or release the second to lowest insulation board (28), wherein
the second holding system (22) comprises a clamp system (30a, 30b) that is configured to push against one or more side surfaces of the second to lowest insulation board (28) for clamping the second to lowest insulation board (28) in place.

2. The mobile system (2) according to claim 1, wherein the mobile system is configured to hold the plurality of insulation boards (4) such that, before the lowest insulation board (26) is dispensed from the mobile system, a side surface of the lowest insulation board (26), when the mobile system is tilted, touches a side surface of an already placed insulation board (60).

3. The mobile system (2) according to claim 1 or 2, wherein the first holding system (20) comprises one or more movable elements (32) that are each configured to move between a hold position and a release position, wherein each movable element (32a, 32b) is configured to support the lowest insulation board (26) when the movable element (26) is in the hold position and to make way for the lowest insulation board (26) when the movable element (32a, 32b) is in the release position so that the lowest insulation board (26) is released from the mobile system.

4. The mobile system according to any of the preceding claims, wherein at least one element (34a. 34b) of the second holding system (22) has an adjustable position relative to the first holding system (20), preferably has an adjustable height relative to the frame (16).

5. The mobile system (2) according to any of the preceding claims, comprising
a mobility system configured to enable the mobile system to move over the flat roof, wherein
the mobility system comprises one or more elements (40a, 40b), such as one or more wheels, that, in use, touch the flat roof and are supported by the flat roof, wherein
the mobility system is configured to adjust a position, preferably a vertical position, of at least one element out of the one or more elements relative to a or the frame (16) of the mobile system.

6. The mobile system (2) according to any of the preceding claims, comprising
a or the mobility system configured to enable the mobile system (2) to move over the flat roof, the mobility system comprising one or more elements (40a, 40b) that touch and are supported by the flat roof, wherein the one or more elements comprise one or more wheels.

7. The mobile system (2) according to claim 6, wherein each wheel out of the one or more wheels has a diameter of at least 1 meter, preferably of at least 1.5 meter.

8. The mobile system (2) according to any of the preceding claims, further comprising a lifting system (6, 8) that is configured to lift one or more insulation boards (4)in the mobile system (2).

9. The mobile system (2) according to any of the preceding claims, further comprising
an automatic positioning system that is configured to control a position and/or orientation of the mobile system on the roof based on position data, wherein the position data indicate a current position and/or a current orientation of the mobile system on the roof.

10. A method for placing plate-like elements (4) on a surface, the method comprising using the mobile system (2) according to any of the preceding claims for placing the plate-like elements on the surface.

11. The method according to the preceding claim, wherein the plate-like elements are insulation boards and the surface is a surface of a flat roof.

## Patentansprüche

1. Mobiles System (2) zum Platzieren tafelförmiger Elemente (4) auf einer Oberfläche, wobei
das mobile System (2) dazu konfiguriert ist, eine Vielzahl von tafelförmigen Elementen (4) zu halten, und ein Ausgabesystem umfasst, das dazu konfiguriert ist, aus dem mobilen System ein tafelförmiges Element aus der Vielzahl von tafelförmigen Elementen freizugeben, wobei das mobile System dazu konfiguriert ist, Dämmplatten (4) auf einem Flachdach zu platzieren, wobei
die Vielzahl von tafelförmigen Elementen (4) eine Vielzahl von Dämmplatten (4) ist und wobei
das Ausgabesystem ein Dämmplattenausgabesystem ist, das dazu konfiguriert ist, eine Dämmplatte aus der Vielzahl von Dämmplatten aus dem mobilen System (2) freizugeben, wobei
die Dämmplatten (4) der Vielzahl von Dämmplatten untereinander positioniert sind und wobei die Vielzahl von Dämmplatten eine untere Dämmplatte (26), die die unterste Dämmplatte aus der Vielzahl von Dämmplatten ist, und eine zweitunterste Dämmplatte (28), die die zweitunterste Dämmplatte aus der Vielzahl von Dämmplatten ist, umfasst, wobei
das Dämmplattenausgabesystem dazu konfiguriert ist, die unterste Dämmplatte (26) aus dem mobilen System (2) freizugeben, ohne die zweitunterste Dämmplatte (28) aus dem mobilen System freizugeben, wobei
das Dämmplattenausgabesystem Folgendes umfasst:
- ein erstes Haltesystem (20), das dazu konfiguriert ist, die unterste Dämmplatte (26) selektiv zu halten oder freizugeben, und
- ein zweites Haltesystem (22), das dazu konfiguriert ist, die zweitunterste Dämmplatte (28) selektiv zu halten oder freizugeben, wobei
das zweite Haltesystem (22) ein Festklemmsystem (30a, 30b) umfasst, das dazu konfiguriert ist, gegen eine oder mehrere Seitenoberflächen der zweituntersten Dämmplatte (28) zu drücken, um die zweitunterste Dämmplatte (28) an Ort und Stelle festzuklemmen.

2. Mobiles System (2) nach Anspruch 1, wobei das mobile System dazu konfiguriert ist, die Vielzahl von Dämmplatten (4) so zu halten, dass, bevor die unterste Dämmplatte (26) aus dem mobilen System ausgegeben wird, eine Seitenoberfläche der untersten Dämmplatte (26), wenn das mobile System gekippt wird, eine Seitenoberfläche einer bereits platzierten Dämmplatte (60) berührt.

3. Mobiles System (2) nach Anspruch 1 oder 2, wobei das erste Haltesystem (20) ein oder mehrere bewegbare Elemente (32) umfasst, die jeweils dazu konfiguriert sind, sich zwischen einer Halteposition und einer Freigabeposition zu bewegen, wobei jedes bewegbare Element (32a, 32b) dazu konfiguriert ist, die unterste Dämmplatte (26) zu stützen, wenn sich das bewegbare Element (26) in der Halteposition befindet, und für die unterste Dämmplatte (26) Platz zu machen, wenn sich das bewegbare Element (32a, 32b) in der Freigabeposition befindet, sodass die unterste Dämmplatte (26) aus dem mobilen System freigegeben wird.

4. Mobiles System nach einem der vorhergehenden Ansprüche, wobei mindestens ein Element (34a. 34b) des zweiten Haltesystems (22) eine einstellbare Position relativ zu dem ersten Haltesystem (20) aufweist, vorzugsweise eine einstellbare Höhe relativ zu dem Rahmen (16) aufweist.

5. Mobiles System (2) nach einem der vorhergehenden Ansprüche, umfassend
ein Mobilitätssystem, das dazu konfiguriert ist, zu ermöglichen, dass sich das mobile System über das Flachdach bewegt, wobei
das Mobilitätssystem ein oder mehrere Elemente (40a, 40b) umfasst, wie ein oder mehrere Räder, die im Gebrauch das Flachdach berühren und durch das Flachdach gestützt werden, wobei
das Mobilitätssystem dazu konfiguriert ist, eine Position, vorzugsweise eine vertikale Position, mindestens eines Elements aus dem einen oder den mehreren Elementen relativ zu einem oder dem Rahmen (16) des mobilen Systems einzustellen.

6. Mobiles System (2) nach einem der vorhergehenden Ansprüche, umfassend
ein oder das Mobilitätssystem, das dazu konfiguriert ist, zu ermöglichen, dass sich das mobile System (2) über das Flachdach bewegt, wobei das Mobilitätssystem ein oder mehrere Elemente (40a, 40b) umfasst, die das Flachdach berühren und durch dieses gestützt werden, wobei das eine oder die mehreren Elemente ein oder mehrere Räder umfassen.

7. Mobiles System (2) nach Anspruch 6, wobei jedes Rad aus dem einen oder den mehreren Rädern einen Durchmesser von mindestens 1 Meter, vorzugsweise von mindestens 1,5 Meter, aufweist.

8. Mobiles System (2) nach einem der vorhergehenden Ansprüche, ferner umfassend ein Hebesystem (6, 8), das dazu konfiguriert ist, eine oder mehrere Dämmplatten (4) in dem mobilen System (2) anzuheben.

9. Mobiles System (2) nach einem der vorhergehenden Ansprüche, ferner umfassend
ein automatisches Positionierungssystem, das dazu konfiguriert ist, eine Position und/oder Ausrichtung des mobilen Systems auf dem Dach basierend auf Positionsdaten zu steuern, wobei die Positionsdaten eine aktuelle Position und/oder eine aktuelle Ausrichtung des mobilen Systems auf dem Dach angeben.

10. Verfahren zum Platzieren tafelförmiger Elemente (4) auf einer Oberfläche, wobei das Verfahren Verwenden des mobilen Systems (2) nach einem der vorhergehenden Ansprüche zum Platzieren der tafelförmigen Elemente auf der Oberfläche umfasst.

11. Verfahren nach dem vorhergehenden Anspruch, wobei die tafelförmigen Elemente Dämmplatten sind und die Oberfläche eine Oberfläche eines Flachdachs ist.

## Revendications

1. Système mobile (2) pour poser des éléments en forme de plaque (4) sur une surface, dans lequel
le système mobile (2) est conçu pour maintenir une pluralité d'éléments en forme de plaque (4) et comprend un système de distribution qui est conçu pour libérer du système mobile un élément en forme de plaque parmi la pluralité d'éléments en forme de plaque, dans lequel le système mobile est conçu pour placer des panneaux isolants (4) sur un toit plat, dans lequel
la pluralité d'éléments en forme de plaque (4) est une pluralité de panneaux isolants (4), et dans lequel
le système de distribution est un système de distribution de panneaux isolants qui est conçu pour libérer du système mobile (2) un panneau isolant parmi la pluralité de panneaux isolants, dans lequel
les panneaux isolants (4) de la pluralité de panneaux isolants sont positionnés les uns en dessous des autres et dans lequel la pluralité de panneaux isolants comprend un panneau isolant inférieur (26), qui est le panneau isolant le plus bas parmi la pluralité de panneaux isolants, et un second panneau isolant le plus bas (28), qui est le second panneau isolant le plus bas parmi la pluralité de panneaux isolants, dans lequel
le système de distribution de panneaux isolants est conçu pour libérer le panneau isolant le plus bas (26) du système mobile (2) sans libérer le second panneau isolant le plus bas (28) du système mobile, dans lequel
le système de distribution de panneaux isolants comprend
- un premier système de maintien (20) qui est conçu pour maintenir ou libérer sélectivement le panneau isolant le plus bas (26), et
- un second système de maintien (22) qui est conçu pour maintenir ou libérer sélectivement le second panneau isolant le plus bas (28), dans lequel
le second système de maintien (22) comprend un système de serrage (30a, 30b) qui est conçu pour pousser contre une ou plusieurs surfaces latérales du second panneau isolant le plus bas (28) pour le serrage du second panneau isolant le plus bas (28) en place.

2. Système mobile (2) selon la revendication 1, dans lequel le système mobile est conçu pour maintenir la pluralité de panneaux isolants (4) de sorte que, avant que le panneau isolant le plus bas (26) ne soit distribué à partir du système mobile, une surface latérale du panneau isolant le plus bas (26), lorsque le système mobile est incliné, touche une surface latérale d'un panneau isolant déjà placé (60).

3. Système mobile (2) selon la revendication 1 ou 2, dans lequel le premier système de maintien (20) comprend un ou plusieurs éléments mobiles (32) qui sont chacun conçus pour se déplacer entre une position de maintien et une position de libération, dans lequel chaque élément mobile (32a, 32b) est conçu pour supporter le panneau isolant le plus bas (26) lorsque l'élément mobile (26) est dans la position de maintien et pour faire place au panneau isolant le plus bas (26) lorsque l'élément mobile (32a, 32b) est dans la position de libération afin que le panneau isolant le plus bas (26) soit libéré du système mobile.

4. Système mobile selon l'une quelconque des revendications précédentes, dans lequel au moins un élément (34a, 34b) du second système de maintien (22) présente une position réglable par rapport au premier système de maintien (20), présente de préférence une hauteur réglable par rapport au cadre (16).

5. Système mobile (2) selon l'une quelconque des revendications précédentes, comprenant
un système de mobilité conçu pour permettre au système mobile de se déplacer sur le toit plat, dans lequel
le système de mobilité comprend un ou plusieurs éléments (40a, 40b), tels qu'une ou plusieurs roues, qui, lors de l'utilisation, touchent le toit plat et sont supportés par le toit plat, dans lequel
le système de mobilité est conçu pour régler une position, de préférence une position verticale, d'au moins un élément parmi les un ou plusieurs éléments par rapport à un ou au cadre (16) du système mobile.

6. Système mobile (2) selon l'une quelconque des revendications précédentes, comprenant
un ou le système de mobilité conçu pour permettre au système mobile (2) de se déplacer sur le toit plat, le système de mobilité comprenant un ou plusieurs éléments (40a, 40b) qui touchent et sont supportés par le toit plat, dans lequel les un ou plusieurs éléments comprennent une ou plusieurs roues.

7. Système mobile (2) selon la revendication 6, dans lequel chaque roue parmi les une ou plusieurs roues présente un diamètre d'au moins 1 mètre, de préférence d'au moins 1,5 mètre.

8. Système mobile (2) selon l'une quelconque des revendications précédentes, comprenant en outre un système de levage (6, 8) qui est conçu pour soulever un ou plusieurs panneaux isolants (4) dans le système mobile (2).

9. Système mobile (2) selon l'une quelconque des revendications précédentes, comprenant en outre
un système de positionnement automatique qui est conçu pour commander une position et/ou une orientation du système mobile sur le toit sur la base de données de position, dans lequel les données de position indiquent une position actuelle et/ou une orientation actuelle du système mobile sur le toit.

10. Procédé pour poser des éléments en forme de plaque (4) sur une surface, le procédé comprenant l'utilisation du système mobile (2) selon l'une quelconque des revendications précédentes pour poser les éléments en forme de plaque sur la surface.

11. Procédé selon la revendication précédente, dans lequel les éléments en forme de plaque sont des panneaux isolants et la surface est une surface d'un toit plat.
